# EUROPEAN PATENT APPLICATION

(11) **EP 1 528 697 A1**
(43) Date of publication of application: **04.05.2005**
(21) Application number: 03292707.1
(22) Date of filing: 30.10.2003
(51) Int. Cl.: H04B 10/155

(54) **Optical transmitter using RZ-DPSK modulation**

(71) Applicant: ALCATEL, 75008 Paris (FR)
(72) Inventor: Lazaro Villa, José Antonio, Dr., 70439 Stuttgart (DE); Idler, Wilfried, 71706 Markgröningen (DE); Dischler, Roman, 70469 Stuttgart (DE)
(74) Representative: Rausch, Gabriele, Dr.

(57) **Abstract**

An optical transmitter for RZ-DPSK coded optical signals (RZ-DPSK) has a single dual-drive Mach-Zehnder modulator (MZM), a data line for an electrical NRZ data signal (D) and a clock line for an electrical RZ clock signal (C). The two modulator branches (B1, B2) are driven by first and second electrically combined signals, respectively, where either the data or the clock signal combined to the second combined signal (D-C) is a complementary signal to the corresponding clock or data signal combined to the first combined signal (D+C).

## Description

### Field of the Invention

The present invention relates to the field of telecommunications and more particularly to a transmitter for generating RZ-DPSK modulated optical signals.

### Background of the Invention

For long-haul optical signal transmission, information to be transmitted is modulated onto an optical carrier signal and transmitted over an optical fiber link. Due to dispersion and other physical effects in the optical fiber, the modulated optical signal is subject to distortion that limits the data rate and the span length the signal can pass without signal regeneration.

Currently, next generation transmission systems using bitrates in the range of 40 Gbit/s - in particular 42,6 Gbit/s - are being developed. The development of cost-effective 43 Gbit/s transmission systems, however, requires comprehensive evaluations of modulation formats regarding system performance and tolerances. Optical signal-to-noise (OSNR) sensitivity, penalty by residual chromatic dispersion (CD) and differential group delay (DGD) due to first order polarization mode dispersion (PMD) are of major interest for the system design.

Two binary modulation schemes are mainly used, namely intensity modulation also known as amplitude shift keying (ASK) and phase modulation also known as phase shift keying (PSK), from which the most common realization is the differential phase shift keying (DPSK). ASK is essentially a simple on/off modulation of the carrier signal. DPSK on the other hand is a modulation where the phase of the carrier signal is discretely varied. The data is represented in the phase difference of two signal elements while the amplitude of the DPSK modulated signal is typically constant. This DPSK scheme is referred as non-return-to-zero DPSK (NRZ-DPSK).

Whilst amplitude shift keying is mainly used today, it has been shown that differential phase shift keying has certain advantages at higher bitrates. In particular, the inventors have demonstrated that the best performance can be achieved with a DPSK modulation with additional pulse formation, also named pulse carving, a modulation scheme that is referred to as return-to-zero DPSK (RZ-DPSK). A survey on RZ and NRZ modulation formats by the inventors can be found in the conference paper "System Performance and Tolerances of 43 Gb/s ASK and DPSK modulation formats", W. Idler et al, ECOC 22-26 Sept. 2003.

The article "Suppression of Cross-Gain Modulation in SOA Using RZ-DPSK Modulation Format" by P. Cho et al, IEEE Photonics Technology Letters, vol 15 no. 1, Jan 2003 pages 162 to 164 shows in an experimental setup the generation of a RZ-DPSK modulated signal. The setup uses a first modulator to create the periodical RZ modulation and a second modulator to add the DPSK data modulation.

Another modulator setup that generates RZ-DPSK modulation is shown in the United States Patent Application Publication US 2003/0007216 A1. It uses a pulse carver, not described in any more detail, to generate a RZ-modulated signal from a continuous wave (cw) input signal and a subsequent PSK modulator that modulates the phase of the light pulses with differential data. The document mentions that the RZ signal can alternatively be generated within the PSK modulator but does not evaluate this approach any further.

European Patent Application EP 1 271 808 A2 describes an optical transmitter that uses an optical phase modulating unit to generate an encoded DPSK phase modulated signal and an optical filter unit to convert the phase modulated signal to an RZ intensity modulated signal.

The most-commonly used external modulator type is the Mach-Zehnder modulator (MZM) and in particular the MZM based on LiNbO₃ technology. The linear electro-optic effect that is used to produce a phase change in the branches of the Mach-Zehnder modulator is known as the Pockets-effect. For LiNbO₃, the application of an electric field results in a change in the refractive index and therefore varies the phase of the propagating light. The strength of this electro-optic effect is dependent on the direction of the applied electrical field and the orientation of the LiNbO₃ crystal planes. Hence, the electrode placement and configuration is a critical issue. The "Photonics Modules Reference Manual" published June 2002 by VPlsystems gives on pages 5-14 to 5-20 an overview over available Mach-Zehnder modulators. Depending on the electrode placement and crystal orientation, Mach-Zehnder modulators are distinguished in unbalanced single-drive, balanced single-drive and balanced differential-drive, more generally dual-drive, modulators and in x-or y-cut and z-cut modulators types.

All experimental transmitters reported up to now which generate RZ-DPSK modulation use two optical modulators, one for the NRZ-DPSK data modulation and one for the on/off RZ modulation by a periodical signal that is referred to as the clock. Moreover, some manufacturers such as Corning Inc. are already offering a single package with two MZMs integrated on a single substrate. The Mach-Zehnder modulator is, however, a quite expensive component of the transmitter and due to that, the utilization of RZ-DPSK formats in commercial transmission systems is handicapped by the increase of price on the transmitter.

It is therefore an object of the present invention to provide a less-expensive transmitter for RZ-DPSK modulated optical signals.

### Summary of the Invention

These and other objects that appear below are achieved by an optical transmitter with a single dual-driven Mach-Zehnder modulator, where an electrical NRZ data signal and an electrical on/off RZ clock signal are combined to drive the single MZM to produce an RZ-DPSK modulated optical signal from a cw input signal.

### Brief Description of the Drawings

Preferred embodiments of the present invention will now be described with reference to the accompanying drawings in which
- figure 1: shows a prior art transmitter using two MZMs to generate a RZ-DPSK modulated signal;
- figure 2: shows schematically the MZM configuration according to the invention;
- figure 3: shows a transmitter according to the invention;
- figure 4: a balanced differential drive z-cut MZM as it is used in a preferred embodiment of the invention; and
- figure 5: shows a x- or y-cut MZM as it is used in another embodiment of the present invention.

### Detailed Description of the Invention

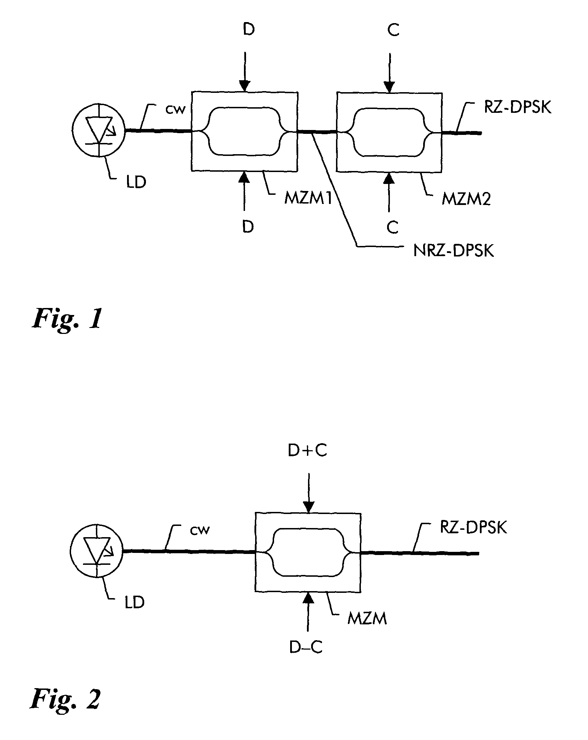

A conventional setup for generating RZ-DPSK modulation is shown by way of example in figure 1. A semiconductor laser diode LD emits a continuous wave light signal cw. Light signal cw is then applied to a first Mach-Zender modulator MZM1, which is driven by a data signal D. MZM1 acts as a phase modulator and applies a NRZ-DPSK modulation to the light signal cw, which is then fed to a second Mach-Zender modulator MZM2. MZM2 is driven by a clock signal C and acts as an intensity modulator. The output of the second modulator MZM2 is a RZ-DPSK modulated optical signal.

Both modulators used are made of LiNbO₃. It has to be noted that a Mach-Zender modulator can be used for both, as a phase modulator and as an amplitude modulator. For amplitude modulation, typically phase changes of equal magnitude but opposite sign in the two branches of the MZM have to be produced, while for phase modulation, usually the phase changes with the same sign in the two branches are required. Therefore, modulator types with different crystal orientation and electrode placement are typically used for phase and intensity modulation by driving the two branches of the MZM with the same or complementary signals.

The basic idea of the present invention is to use a single Mach-Zender modulator and to drive it with a combined electrical data and clock signal. A basic requirement for the MZM is that the two modulator branches can be driven separately. The modulator is thus a dual-drive or differentially-driven modulator.

The invention is shown schematically in figure 2. The cw light signal from laser diode LD is fed to a single Mach-Zehnder modulator MZM which is driven by two electrical signals D+C and D-C to generate the RZ-DPSK modulated output signal.

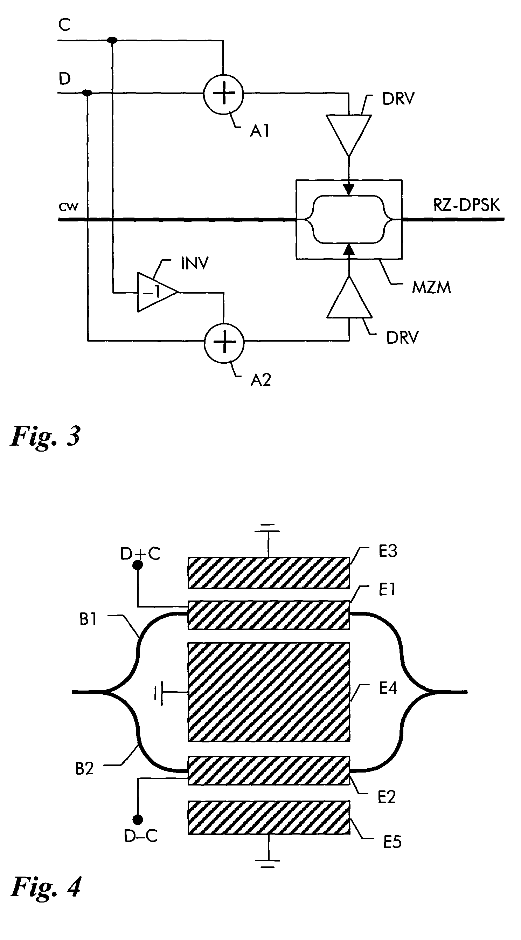

A circuit diagram of the transmitter is shown in figure 3. A data signal D and a corresponding clock signal C are combined in an electrical combiner A1 and fed via an appropriate driver DRV to the first branch of the MZM while the clock signal C is inverted first by inverting amplifier INV and then combined in electrical combiner A2 with the data signal D to drive the second branch of the MZM via a second driver DRV. The output of the MZM is the RZ-DPSK modulated optical signal RZ-DPSK.

Figure 4 shows the modulator MZM from figure 3 in more detail. It is a z-cut modulator, which means that the LiNbO₃ crystal from which the modulator is made is cut perpendicular to its z-direction. LiNb03 is an anisotropic material and the z-direction of the crystal is the direction which shows the strongest Pockels effect.

Two copper electrodes E1 and E2 are placed on top of the two modulator branches B1 and B2, respectively. Electrodes E3 and E5 and common center electrode E4 are placed sideways to the modulator branches and are connected to ground while modulating electrical signals are connected to electrodes E1 and E2.

When a voltage is applied to for example electrode E1, an electric field with an orientation in the z-direction of the crystal is generated which causes a change of the refractive index in waveguide branch B1. The electrode placement in this case is such that a voltage of equal sign at electrodes E1 and E2 results in an electric field of the same orientation and thus of an equal change of the refractive index in the two branches B1, B2. For amplitude modulation, electrical signals with voltage of opposite sign are thus required while for phase modulation, the voltage of the signals applied to the two branches have equal signs. According to the invention, data signal D has thus equal signs in the two branches while clock signal C has opposite signs. The electrical signal applied to branch B1 is thus D+C and the electrical signal for branch B2 D-C.

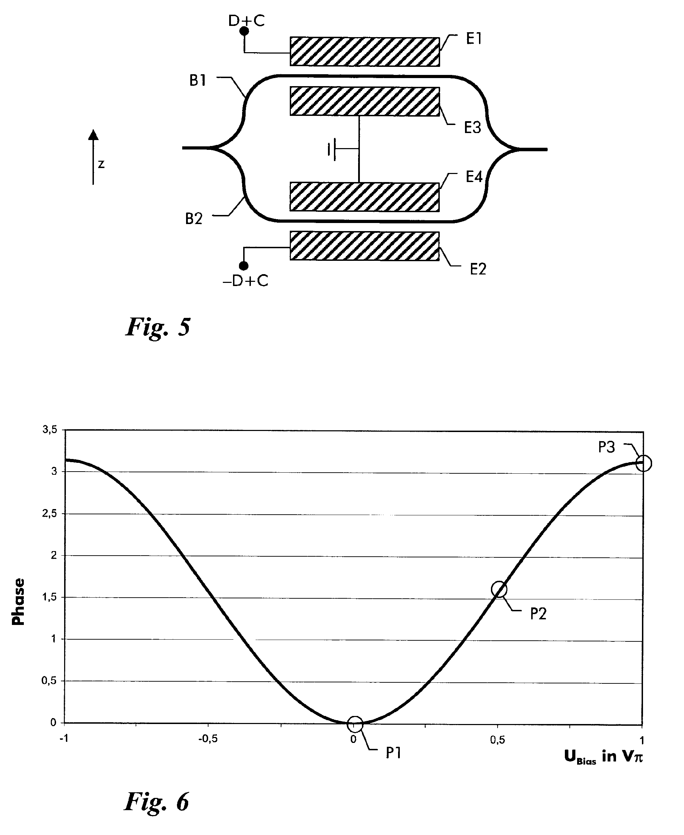

Figure 5 shows an alternative embodiment using a x-cut or a y-cut LiNbO₃ crystal. The z-direction as indicated by a small arrow lies in the waveguide plane perpendicular to the waveguides. Electrodes E1 and E3 are arranged sideways of waveguide branch B1 and electrodes E4 and E2 are arranged sideways of waveguide branch B2. As opposed to the usual design of x- or y-cut MZMs, electrodes E3 and E4 are connected to the chassis ground of the modulator while electrical signals used for modulation are applied to electrodes E1 and E2. Thus, when electrical signals with equal signs are applied to electrodes E1 and E2, the electrical fields in branches B1 and B2 have opposite orientation and hence cause opposite sign phase changes in the two branches. Therefore, clock signals C are the same in both electrodes but data signal D in electrode E2 has to be inverted.

Another aspect of RZ-DPSK modulation is the duty cycle of the RZ amplitude modulation. The phase shift in either of the two modulator branches depends on the external voltage applied to the corresponding electrode. In order to operate the MZM properly, the operation point, where the phase difference between the two branches has a predefined nominal value, must be set by applying an external DC bias voltage (not shown in the figures). Figure 6 shows in a diagram the phase difference between the two branches of the MZM as a function of the normalized bias voltage. The curve has substantially a cosine shape. Point P1 is the point where there is no phase difference between the two modulator branches and the transmission has reached a maximum. This point is also known as the quadrature bias point. Point P2 is the 3dB point, where the output of the modulator has reached -3dB from the maximum value. At this point, the phase difference between the two branches is π/2 (or 90°). At point P3, the second quadrature bias point, the phase difference between the two branches has reached π (or 180°) and the transmission of the MZM shows a minimum. The normalized bias voltage is shown in values of Vπ, i.e., in multiples of the voltage value necessary to shift the phase by an amount of π.

Depending on the modulation scheme used, the operation point can be set to either of these three points P1, P2 or P3. At point P2, the clock signal needs typically to have an amplitude of only Vπ/2 in both arms of the MZM and a frequency B that equals the bitrate of the data signal. The generated pulses have a duty cycle of 50% and due to that this modulation scheme is called RZ-50%. At point P1, the dual clock signal must have an amplitude of Vπ but only half the frequency B/2. This modulation scheme is called RZ-33%. The same applies at point P3, where the modulation is then called RZ-66%.

All three modulation schemes can be applied in a transmitter according to the invention. For the RZ-50% modulation scheme, the modulator drivers DRV (figure 3) have a maximum output voltage of 1,5 Vπ and for the RZ-33% and RZ-66%, the drivers have a maximum output voltage of 2 Vπ. This presents no problem today, because broad band modulator drivers with high saturation output of about 8 to 10 V are already available on the market. Moreover, low drive voltage 40 Gbit/s LiNbO₃ modulators with Vπ of only 0,9 V have been announced ("Driver-less 40 Gb/s LiNbO₃ modulator with sub-1V drive voltage" by M. Sugiyama et al., OFC 2002 post-deadline paper FB6) and modulators with Vπ of only 1,8 V are already available on the market.

Tests and simulations have shown, that there is no significant difference in performance of a transmitter with only one modulator according to the invention as compared to a setup using two modulators.

A sinusoidal signal can preferably be used as clock signal. The modulator drivers can be any amplifier with appropriate bandwidth. We have used commercially available modulator drivers for this purpose. If the voltage Vπ of the MZM is sufficiently low, no separate driver would be required at all. Instead inverting the clock signal with an inverting or differential amplifier, an electric phase delay can instead be used and the clock signal not inverted but delayed by half a period. In both cases, we call this a signal and its complementary signal. These and many other modifications would be apparent to those skilled in the art after having read and understood the above-described embodiments of the invention.

## Claims

1. An optical transmitter for RZ-DPSK coded optical signals (RZ-DPSK) comprising a data line for an electrical NRZ data signal (D) and a clock line for an electrical clock signal (C),
**characterized by**
a dual-drive Mach-Zehnder modulator (MZM) with two separately driven waveguide branches; a first combiner (A1) for electrically combining said electrical NRZ data signal (D) and said electrical clock signal (C) to drive the first of said two branches (B1) and a second combiner (A2) for electrically combining said electrical NRZ data signal (D) and said electrical clock signal (C) to drive the second of said two branches (B2), wherein either the data or the clock signal combined in the second combiner (A2) is a complementary signal to the corresponding clock or data signal in the first combiner (A1).

2. A transmitter according to claim 1 wherein the Mach-Zehnder modulator is made from LiNbO₃.

3. A transmitter according to claim 2, wherein the Mach-Zehnder modulator (MZM) is a balanced differential-drive z-cut Mach-Zehnder modulator of which the first branch is driven by a combined data signal and clock signal (D+C) and the second branch is driven by a combined data signal and complementary clock signal (D-C).

4. A transmitter according to claim 2, wherein the Mach-Zehnder modulator (MZM) is a x-cut or a y-cut Mach-Zehnder modulator wherein the first branch is driven by a combined data signal and clock signal (D+C) and the second branch is driven by a combined complementary data signal and clock signal (-D+C).

5. A transmitter according to claim 1 wherein said Mach-Zehnder modulator (MZM) has its operation point adjusted to the 3dB point (P2) using an appropriate DC bias voltage; wherein said clock signal has a frequency that equals the bitrate of said data signal and wherein drivers (DRY) with a maximum output voltage of at least 1,5 times a Vπ value of said Mach-Zehnder modulator are provided to drive the two modulator branches (B1, B2), respectively.

6. A transmitter according to claim 1 wherein said Mach-Zehnder modulator (MZM) has its operation point adjusted to a quadrature bias point (P1, P3) using an appropriate DC bias voltage; wherein said clock signal has a frequency that is half the bitrate of said data signal and wherein drivers (DRV) with a maximum output voltage of at least 2 times a Vπ value of said Mach-Zehnder modulator are provided to drive the two modulator branches (B1, B2), respectively.

7. A method of generating RZ-DPSK coded optical signals (RZ-DPSK) from an electrical NRZ data signal (D) and an electrical clock signal (C),
**characterized by** the steps of
- electrically combining said electrical NRZ data signal (D) and said electrical clock signal (C) to a first combined signal (C+D)
- electrically combining said electrical NRZ data signal (D) and said electrical clock signal (C) to a second combined signal (D-C; -D+C), wherein either the data or the clock signal in said second combining step is a complementary signal to the corresponding clock or data signal in the first combining step;
- driving a dual-drive Mach-Zehnder modulator (MZM) having two separately driven waveguide branches; with said first and second combined signals, respectively.

8. A method according to claim 7, wherein the clock signal is a sinusoidal clock signal.
